# EUROPEAN PATENT SPECIFICATION

(11) **EP 3 138 414 B1**
(45) Date of publication and mention of the grant of the patent: **04.07.2018**
(21) Application number: 14899416.3
(22) Date of filing: 18.08.2014
(51) Int. Cl.: A23L 33/00

(54) **COMPREHENSIVE NUTRITION POWDER AND PREPARATION METHOD THEREFOR**
UMFASSENDES NÄHRSTOFFPULVER UND HERSTELLUNGSVERFAHREN DAFÜR
POUDRE DE NUTRITION COMPLÈTE ET SON PROCÉDÉ DE PRÉPARATION

(30) Priority: 07.08.2014 CN 201410385229
(43) Date of publication of application: 08.03.2017
(73) Proprietor: Beijing DOCTOR LU Behavioral Medicine Science and Technology Research Institute Co., Ltd., Beijing (CN)
(72) Inventor: ZHANG, Xiuping, Beijing 102101 (CN); LU, Mingfu, Beijing 102101 (CN)
(74) Representative: Cabinet Chaillot
(86) International application number: PCT/CN2014/084582
(87) International publication number: WO 2016/019597

(56) References cited:
- WO-A1-2011/060123
- WO-A2-2006/134409
- CN-A- 101 810 336
- CN-A- 102 550 895
- CN-A- 103 431 391
- JP-A- 2006 515 287
- JEONG S C ET AL: "White button mushroom (Agaricus bisporus) lowers blood glucose and cholesterol levels in diabetic and hypercholesterolemic rats", NUTRITION RESEARCH, ELSEVIER INC, XX, vol. 30, no. 1, 1 January 2010 (2010-01-01), pages 49-56, XP026867564, ISSN: 0271-5317 [retrieved on 2010-01-25]
- DATABASE FSTA [Online] INTERNATIONAL FOOD INFORMATION SERVICE (IFIS), FRANkFURT-MAIN, DE; PRADO ZANES FURLANI R ET AL: "Nutritional value of edible mushrooms.", XP002769415, Database accession no. FS-2007-08-Jq3251

## Description

### Technical Field

The invention belongs to the field of nutritional foods and relates to complete nutritional powder and a preparation method thereof, particularly complete nutritional powder for treating life-style diseases (such as obesity, high blood pressure, high blood sugar and high blood fat) by interference of dietary nutrition and a preparation method thereof.

### Background

Currently, there are a great variety of complete nutritional supplement products, of which most are targeted at routine nutrient supplement of ordinary people and some are aimed at nutrient enrichment of specific groups, like children, pregnant women, mid-aged and old people and so on. There are complete nutritional products available for reducing weight, such as Herbalife and Shaklee from USA and Sunny Health from Japan, but these products are universally limited in formula and therefore are not suitable for treating obesity mechanism of Chinese people.

CN101637255A discloses a hypoglycemic nutritional powder capable of effectively reducing blood sugar and urine sugar, which comprises the following raw materials in part by weight: 5-25 parts of wheat bran; 5-20 parts of buckwheat; 5-20 parts of hulless oat; 5-20 parts of white corn; 5-15 parts of soybean; 5-15 parts of millet; 3-10 parts of red phaseolus bean; 3-10 parts of pea; 3-10 parts of sorghum; 2-10 parts of sesame; 1-5 parts of tremella; 1-5 parts of lily; and 1-5 parts of medlar. The hypoglycemic nutritional power is prepared by the following steps: adding 1-2 parts of table vinegar and 0.5-1 part of sugar into each 10 parts of wheat bran, fully mixing them, adding drinking water in an amount that allows the mixture to be wetted to make dough, making the dough into hollow steam breads, steaming the breads for 20-30 min, cooling the breads, drying the cooled breads, crushing the breads, baking the crushed the crushed breads till their surface turns yellow, grinding the crushed breads to 100-120 meshes and keeping the powder for later use; washing sesame, drying the sesame in the air, frying the sesame completely, and grinding them to 60-80 meshes; washing buckwheat, hulless oat, white corn, soybean, millet, red phaseolus bean, pea and sorghum, drying in the air, grinding these materials to 80-100 meshes for later use; washing medlar, lily and tremella, drying them in the air and then crushing to 60 to 100 mesh powder for later use; and mixing powder of all raw materials and packaging the mixed powder. The nutritional power is used as main or auxiliary material in a dietotherapy for treating diabetes and high blood fat to assist in treatment. The nutritional powder, based on dietotherapy, is not so effective.

CN102273520B whey nutritional powder and a preparation method thereof. The nutritional powder is prepared to regulate the blood fat of human being by using whey liquid produced in cheese fermentation and scientific nutrient needs and chickpea as raw materials and a unique process based on scientific nutrient needs. The nutritional powder contains rich natural protein that can be easily digested and absorbed by human body, 18 amino acids of which 40% are 9 (including necessary histidine for infants) that are necessary for human body, 61% of unsaturated fatty acid, 5.58% of lactose, and rich vitamins including VB2 and VC and rich minerals like potassium, calcium, magnesium, zinc and iron. According to literature, the nutritional powder is good for body building, nourishing and improving body immunity, and therefore is a high-nutrient and low-starch nutritional food that is suitable for people with high blood fat and blood sugar and children and mid-aged and old people. But as is indicated in the literature, the preparation method and formula of the nutritional powder are not reasonable, so that the nutritional powder is mainly to supply nutrient, but is ineffective in treating blood fat and blood sugar.

CN1146305A discloses nutritional powder for treating diabetes, which comprises the following ingredients in part by weight: 20 to 40 parts of pumpkin powder, 20 to 40 parts of soybean powder, 5 to 15 parts of beer yeast, 20 to 40 parts of buckwheat powder, and 15 to 30 parts of pectin. According to the literature, the nutritional powder can relive the hungry feeling of patients during dietotherapy, so the patient can better continue the dietotherapy as planned. The nutritional powder, based on natural food, has no side effect and cheap, so people with all types of diabetes can use for a long time. Meanwhile, the nutritional powder has the effects of reducing blood sugar and preventing complication. The nutritional powder also can improve the sensitivity of tissues to insulin, thereby improving the treatment effect of insulin and reducing the applied amount of insulin. However, the formula of the nutritional powder is not specific for treating high blood fat, high blood sugar and so on. Jeong S C et al., Nutrition Research, Vol.30, No.1, 2010, pages 49-56, discloses compositions containing Agaricus bisporus for treating diabetic and hypercholesterolemic rats.

WO-A-2006/134409 discloses synergistic prebiotic compositions.

Furlani et al., Ciencia e Tecnologia de Alimentos, Vol.27, 2007, discloses nutritional foods that contain edible fungi and vitamin C.

CN-A-10 343 1391 discloses nutrition powder compositions that contain (among other ingredients) vitamin C.

CN-A-10 255 0895 discloses enzyme preparations obtainable from a Koji fermentation.

Complete nutritional powder capable of treating life-style diseases (such as obesity, high blood pressure, high blood sugar and high blood fat) by effective improvement of diets with nutrients and a preparation method thereof are needed yet.

### Invention Content

To solve the above problem of the prior art, the inventor proposes the following scheme after conducting deep study:

In one aspect, the invention provides complete nutritional powder, which is characterized by comprising the following ingredients: vitamin B1, vitamin B2, vitamin B6, pantothenic acid, niacin, vitamin B12, vitamin C, vitamin A, vitamin K, vitamin D, vitamin E, biotin, folic acid, calcium, magnesium, iron, zinc, selenium, chromium, copper, manganese, corn fiber powder, inulin, isolated soy protein powder, black bean extract, Brazil mushroom extract, soya bean lecithin, semen phaseoli extract, L-carnitine, β carotene, lycopene, citrus extract, vanadium, acerola cherry extract, grape seed extract, maltodextrin, essence, ethyl maltol, aspartame, and acesulfame.

Preferentially, the complete nutritional powder comprises the following ingredients in part by weight:

| Ingredient | Weight ratio |
|---|---|
| Vitamin B1 | 0.04 |
| Vitamin B2 | 0.04 |
| Vitamin B6 | 0.04 |
| Pantothenic acid | 0.04 |
| Niacin | 0.04 |
| Vitamin B12 | 0.00004 |
| Vitamin C | 0.45 |
| Vitamin A | 0.0009 |
| Vitamin K | 0.000027 |
| Vitamin D | 0.0000113 |
| Vitamin E | 0.75 |
| Biotin | 0.00004 |
| Folic acid | 0.00059 |
| Calcium | 1.625 |
| Magnesium | 0.8125 |
| Iron | 0.027 |
| Zinc | 0.18 |

| | |
|---|---|
| Selenium | 0.00026 |
| Chromium | 0.0004 |
| Copper | 0.0022 |
| Manganese | 0.0045 |
| Corn fiber powder | 13 |
| Inulin | 8 |
| Isolated soy protein powder | 63 |
| Black bean extract | 6.25 |
| Brazil mushroom extract | 3.75 |
| Soya bean lecithin | 12.5 |
| Semen phaseoli extract | 3.75 |
| L-carnitine | 0.648 |
| β carotene | 0.026 |
| Lycopene | 3 |
| Citrus extract | 0.648 |
| Vanadium | 0.00015 |
| Acerola cherry extract | 7.776 |
| Grape seed extract | 0.7776 |
| Maltodextrin | 1-2 |
| Essence | 0.5-2 |
| Ethyl maltol | 0.1-0.2 |
| Aspartame | 0.05-0.5 |
| Acesulfame | 0.05-0.5 |

As it is normally known in this field, the weight percentage is usually expressed in weight part.

The formula of the invention is very effective in interfering life-style diseases (such as obesity, high blood pressure, high blood sugar and high blood fat) with nutrients. The specific formula is determined by lots of complicated screening work that ensure the ingredients are well matched to produce good compatible and synergistic treatment effect. Based on study results, vitamin C can effectively improve the stability of grape seed extract, and Brazil mushroom extract can effectively reduce blood fat in the presence of corn fiber powder. No formulae with such compatible effect have been reported in the literatures, and also do not come to the minds of technicians in this field easily. The formula of the invention is reported for the first time, and has significant difference with complete nutritional powder on market.

Preferentially, the Brazil mushroom extract comprises at least 80 wt.% of polysaccharide, wherein protein-bound polysaccharide accounts for more than 80 wt.% of the polysaccharide, and preferentially are (1-6)-D-glucan-protein complex. The inventor accidentally found that protein-bound polysaccharide has the best absorption effect in human body and also can best play the polysaccharide effect. In the prior at, protein-bound polysaccharide is usually regarded to hold back the effect of the polysaccharide effect and Savage removal reagent is used to remove protein. According to speculation of the inventor, in the presence of other elements of the complete nutritional powder, particularly trace metal elements, the protein-bound polysaccharide can effectively dissolute in human body.

Preferentially, the acerola cherry extract comprises 5-15 wt.%, preferentially 10 wt.% of 5-hydroxymethyl-furan-2-formaldehyde, and 50-70 wt.%, preferentially 60 wt.% of proline.

Preferentially, the grape seed extract comprises at least 35 wt.%, preferentially at least 60 wt.%, more preferentially 80 wt.% of oligomeric proanthocyanidins.

In another aspect, the invention provides a preparation method of the complete nutritional powder, which comprises the following steps:
(1) Mixing vitamin B1, vitamin B2, vitamin B6, pantothenic acid, niacin, vitamin B12, vitamin C, vitamin A, vitamin K, vitamin D, vitamin E biotin, folic acid, and inorganic salts of vanadium, calcium, magnesium, iron, zinc, selenium, chromium, copper and manganese by weight part in a shear mixer, fully shearing the mixture, grinding the sheared mixture to particles with grain size of less than 10µm to obtain a first mixture;
(2) Uniformly mixing the inulin and isolated soy protein powder in a mixer to obtain a second mixture;
(3) Mixing corn fiber powder, black bean extract, Brazil mushroom extract, soya bean lecithin, semen phaseoli extract, L-carnitine, β carotene, lycopene, citrus extract, acerola cherry extract, grape seed extract, maltodextrin, essence, ethyl maltol, aspartame and acesulfame to obtain a third mixture, adding ethanol and acetone combined solvent into the third mixture, fully mixing to obtain mixed liquid, spray-drying or freeze-drying the liquid to obtain a powder product;
(4) Adding the first mixture, the second mixture and the powder product in to a mixer, mixing them for 15 to 30 minutes, screening them with a 50-80 mesh sieve, sterilizing them with microwave for 0.5-1h, packaging them, and obtaining the finished product of complete nutritional powder after inspection.

The preparation method of the complete nutritional powder of the invention does not mix the ingredients at the same time like the prior art, for the inventor found that grinding the extract may lead to overhigh local temperature that allows the extract to decompose and that the extract is easy to attach onto isolated soy protein powder whose percentage is relatively high and therefore cannot be mixed uniformly in the nutritional powder. According to the inventor, compared with inulin and isolated soy protein powder, corn fiber powder is less likely to strongly attract extract onto it, so the extract is fully mixed with corn fiber powder first and the mixture is spray-dried or freeze-dried into powder; as a result, the extract can be uniformly distributed in the corn fiber powder under the distribution effect of the corn fiber powder; and the spray-drying or freeze-drying, as low-temperature treatment means, can effectively prevent the decomposition of the extract.

Preferentially, in the step (3), the weight ratio of the third mixture to the ethanol is 1:3-1:10.

Preferentially, in the step (3), the volume ratio of ethanol to acetone is 10:1-10:3.

Preferentially, the Brazil mushroom extract is obtained from fermented Brazil mushroom by a method below:
(1) Drying the Brazil mushrooms, crushing them and screening them with a 40 mesh sieve;
(2) Fermenting Brazil mushroom: a. mother seed slant: PDA substrate; b. fermentation substrate: 3wt.% of corn starch, 2wt.% of sucrose, 0.15wt.% of yeast powder, 0.13wt.% of KH₂PO₄, 0.10wt.% of MgSO₄·7H₂O, 1 mg/100mL VB₁, pH of 5-8; and c. mycelium culture: primary shake flask, namely 250mL triangle conical flask, being filled with 50mL of liquid and inoculated with a 0.15cm stain, and secondary shake flash, namely 250mL triangle conical flask, being filled with 50mL of liquid, transferring 10% liquid strain to a rotary shaker, and culturing the strain at 26°C for 5 to 9 days.
(3) After fermentation is finished, washing the mycelia with distilled water, drying at 50 to 70°C, crushing the mycelia and passing the crushed mycelia through a 40-mesh sieve;
(4) Collecting mycelia passing the sieve, add watering according to the weight ratio of mycelia to water of 1:10-1:40, preferentially 1:30, extract at 70-100°C, preferentially 100°C, for 1-6 hours, preferentially 5h, centrifuging the extract, collecting supernate, adding 95% ethanol at volume which is 3-6 times that of the supernate, and obtaining the sidementation, which is polysaccharide enriched extract.

In the invention, extraction after fermentation improves the purity of the extract to nearly 100% polysaccharide. In addition, as mentioned above, no protein remove reagent is used in the prior art to make sure over 80 wt.%, preferentially over 80 wt.%, more preferentially 100 wt.% of the polysaccharide in the extract to be protein-bound polysaccharide, so that protein-bound polysaccharide can be (1-6)-β-D-glucan-protein complex as much as possible and the polysaccharide can be absorbed more effectively.

The complete nutritional powder of the invention can promote energy conversion and prevent harm to body as well. The details are as follows:

### I Promoting energy conversion

1. The complete nutritional powder provides adequate coenzyme to support fat "burning" (fat consumption). The burning of fat needs lots of vitamins and mineral to work together, which is different from the way that the carbohydrate provides energy for cells to keep routine nutrient balance. In addition, the new type of nutrient balance has not been systematically illustrated in the variety of nutrition literatures. The inventor discovers the new formula which is different from routine nutrient supplement in diet through lots of practices. The formula realizes the smooth conversion of fat while avoiding acid accumulation and poisoning caused by incomplete metabolization in similar study. Meanwhile, the formula also treats series of problems like sore muscle, hypodynamia, alopecia, oral ulcer, bleeding gums, ozostomia, astriction and so on.
2. The complete nutritional powder improves activity of cells, and accelerates the regeneration and tissue repair. The process not only needs high-quality raw materials (mainly based on isolated soy protein), but also needs special food with natural activity for enhancement, and this enhancement can be added by adding the Brazil mushrooms.
3. Deeply cleaning fat accumulated in liver and inner wall of blood vessels is achieved by adding soya been lecithin.
4. The semen phaseoli extract is added to strengthen the movement of spleen and improve the utilization efficiency of nutrients.
5. For treating high blood sugar and blood pressure, vitamin B, calcium, magnesium, chromium and water soluble cellulose (inulin) are added.
6. For treating people with serious metabolic disorder like obstinate obesity, L-carnitine is added to address the reduction in L-carnitine (vitamin BT, necessary vector for fat entering cells) synthesis ability of their livers.

### II Preventing harm to body

1. Low sugar diet limits cellulose intake while limiting sugar intake (mainly staple intake), thereby leading to astriction. The addition of non-water-soluble fibers (corn fibers) in the formula is to address symptoms such as dry, loose, sticky and odorous stool.
2. Accelerated fat burning increases the radicals (which account for 90% of the total radicals of human body) generated in mitochondria, which are likely to damage the inner membrane of the mitochondria and the genetic material in the mitochondria and cause various chronic diseases. The β carotene, vitamin C, vitamin E, mineral selenium, Acerola cherry extract, citrus extract, lycopene and grape seed extract are added to increase the mineral content and improve the capacity of human endogenous antioxidant system so as to prevent the damage of the radicals to the cells.
3. Lots of "waste" (namely metabolites) are generated during energy conservation and therefore increase the detoxication load of the liver and the detoxification load of the kidney. The black bean extract (addressing liver and kidney meridians) is added into the formula to deeply nourish the liver and kidney to prevent the haggard complexion problem during weight loss.
4. Burning of lots of fat will lead to loss of lots of mineral. Minerals are added in the formula correspondingly to prevent the bone mineral density from dropping sharply during weight loss like in similar technologies.

The formula of the complete nutritional powder of the invention is developed by continuous optimization through lots of practices and taking matching of elements into consideration or based on the interaction and synergetic effect of the elements. The formula thus is not only capable of quickly relieving life-style disease and improving body health, but also capable of preventing pains and ensuring comfort in treatment.

### Embodiments

### Embodiment 1

The formula of the complete nutritional powder is as follows:

| Ingredients | Weight ratio |
|---|---|
| Vitamin B1 | 0.04 |
| Vitamin B2 | 0.04 |
| Vitamin B6 | 0.04 |
| Pantothenic acid | 0.04 |
| Niacin | 0.04 |
| Vitamin B12 | 0.00004 |
| Vitamin C | 0.45 |
| Vitamin A | 0.0009 |
| Vitamin K | 0.000027 |
| Vitamin D | 0.0000113 |
| Vitamin E | 0.75 |
| Biotin | 0.00004 |
| Folic acid | 0.00059 |
| Calcium | 1.625 |
| Magnesium | 0.8125 |
| Iron | 0.027 |
| Zinc | 0.18 |
| Selenium | 0.00026 |
| Chromium | 0.0004 |
| Copper | 0.0022 |
| Manganese | 0.0045 |
| Corn fiber powder | 13 |
| Inulin | 8 |
| Isolated soy protein powder | 63 |
| Black bean extract | 6.25 |
| Brazil mushroom extract | 3.75 |
| Soya bean lecithin | 12.5 |
| Semen phaseoli extract | 3.75 |
| L-carnitine | 0.648 |
| β carotene | 0.026 |
| Lycopene | 3 |
| Citrus extract | 0.648 |
| Vanadium | 0.00015 |
| Acerola cherry extract | 7.776 |
| Grape seed extract | 0.7776 |
| Maltodextrin | 1 |
| Essence | 1.0 |
| Ethyl maltol | 0.1 |
| Aspartame | 0.2 |
| Acesulfame | 0.2 |

### Reference embodiment 1

The difference between the reference embodiment 1 and the experiment embodiment 1 only lies in that the reference embodiment 1 does not contain Brazil mushroom extract.

### Reference embodiment 2

The difference of the reference embodiment 2 and the experiment embodiment 1 only lies in that the reference embodiment 2 does not contain grape seed extract.

### Experiment embodiment 1

Experimenter Ding XX, receiving treatment for 6 weeks, takes the complete nutritional powder in the embodiment 1 five times each day, 20 grams each time with warm water. In the treatment process, the experimenter shall avoid irregular diet and do moderate exercise. The examination results are provided by Zhejiang Litongde Hospital. The examination before interference is done on August 4^{th}, 2011, and the examination case number is No.20110804LIB203; and the examination done after interference is done on September 24^{th}, 2011, and the examination sheet number is No.20110924LIB158. The experimenter has good mental health after 6 weeks of treatment.

| Item | Before interference | After interference |
|---|---|---|
| Weight | 81.5kg | 65kg |
| BMI | 28.9 | 23 |
| Waistline | 103cm | 82cm |
| Blood uric acid | 417µmol/L | 280µmol/L |
| Triglyceride | 7.77mmol/L | 1.21mmol/L |
| Total cholesterol | 6.40mmol/L | 5.37 mmol/L |
| Fatty liver | Medium | No |

From the above examination results we can see, the complete nutritional powder is very effective in reducing weight, fat and cholesterol of the obese.

### Reference embodiment 1

Experimenter Liu XX, receiving treatment for 6 weeks, takes the complete nutritional powder in the reference embodiment 1 five times each day, 20 grams each time with warm water. In the treatment process, the experimenter shall avoid irregular diet and do moderate exercise. The examination results are provided by Zhejiang Litongde Hospital. The examination before interference is done on August 5^{th}, 2011, and the examination sheet number is No.20110805LIB103; and the examination done after interference is done on September 24^{th}, 2011, and the examination sheet number is No.20110924LIB198. The experimenter feels tired after 6 weeks of treatment.

| Item | Before interference | After interference |
|---|---|---|
| Weight | 91.5kg | 80kg |
| BMI | 32.9 | 27 |
| Waistline | 113cm | 87cm |
| Blood uric acid | 410µmol/L | 250µmol/L |
| Triglyceride | 7.05mmol/L | 1.71mmol/L |
| Total cholesterol | 6.50mmol/L | 5.48 mmol/L |
| Fatty liver | Moderate | Light |

From the above examination results we can see, the complete nutritional powder of the reference embodiment 1 is very effective in reducing fat and cholesterol, but the experimenter often feels tired. In contrast, the experimenter of the experiment embodiment 1 does not feel tired. This is because the Brazil mushroom extract improves the activity of cells and accelerates the regeneration and repair of cells, so the experimenter is more energetic.

In the written description, embodiments are used to disclose the complete nutritional powder of the invention, including the optimal model, and enable the technicians in this field to make and use the complete nutritional powder. The scope of the patent is defined by the claim and other embodiments that the technicians in this field may think. If other embodiments have exactly the same structural elements of the words in the claim or basically equivalent structural elements of the words of the claim, these other embodiments are in the scope of the claim. Without leading to inconsistency, all references in the text will be incorporated into the text by quotation.

## Claims

1. A complete nutritional powder, which is **characterized by** comprising the following ingredients: vitamin B1, vitamin B2, vitamin B6, pantothenic acid, niacin, vitamin B12, vitamin C, vitamin A, vitamin K, vitamin D, vitamin E, biotin, folic acid, calcium, magnesium, iron, zinc, selenium, chromium, copper, manganese, corn fiber powder, inulin, isolated soy protein powder, black bean extract, Brazil mushroom extract, soya bean lecithin, semen phaseoli extract, L-carnitine, β carotene, lycopene, citrus extract, vanadium, acerola cherry extract, grape seed extract, maltodextrin, essence, ethyl maltol, aspartame, and acesulfame.

2. The complete nutritional powder of claim 1 comprising the following ingredients in part by weight:
| Ingredients | Weight ratio |
|---|---|
| Vitamin B1 | 0.04 |
| Vitamin B2 | 0.04 |
| Vitamin B6 | 0.04 |
| Pantothenic acid | 0.04 |
| Niacin | 0.04 |
| Vitamin B12 | 0.00004 |
| Vitamin C | 0.45 |
| Vitamin A | 0.0009 |
| Vitamin K | 0.000027 |
| Vitamin D | 0.0000113 |
| Vitamin E | 0.75 |
| Biotin | 0.00004 |
| Folic acid | 0.00059 |
| Calcium | 1.625 |
| Magnesium | 0.8125 |
| Iron | 0.027 |
| Zinc | 0.18 |
| Selenium | 0.00026 |
| Chromium | 0.0004 |
| Copper | 0.0022 |
| Manganese | 0.0045 |
| Corn fiber powder | 13 |
| Inulin | 8 |
| Isolated soy protein powder | 63 |
| Black bean extract | 6.25 |
| Brazil mushroom extract | 3.75 |
| Soya bean lecithin | 12.5 |
| Semen phaseoli extract | 3.75 |
| L-carnitine | 0.648 |
| β carotene | 0.026 |
| Lycopene | 3 |
| Citrus extract | 0.648 |
| Vanadium | 0.00015 |
| Acerola cherry extract | 7.776 |
| Grape seed extract | 0.7776 |
| Maltodextrin | 1-2 |
| Essence | 0.5-2 |
| Ethyl maltol | 0.1-0.2 |
| Aspartame | 0.05-0.5 |
| Acesulfame | 0.05-0.5 |

3. The complete nutritional powder of claim 1 or 2, wherein the Brazil mushroom extract comprises at least 80 wt.% of polysaccharide, and wherein protein-bound polysaccharide accounts for more than 80 wt.% of polysaccharide, and is preferentially (1-6)-D-glucan-protein complex.

4. The complete nutrittional powder of any one of claims 1-3, wherein the acerola cherry extract comprises 5-15wt.% of 5-hydroxymethyl-furan-2-formaldehyde and 50-70wt.% of proline.

5. The complete nutritional powder of any one of claims 1-4, wherein the grape seed extract comprises at least 35wt.% of oligomeric proanthocyanidins.

6. The preparation method of the complete nutritional powder of any one of claims 1-5 comprising the following steps:
(1) Mixing vitamin B1, vitamin B2, vitamin B6, pantothenic acid, niacin, vitamin B12, vitamin C, vitamin A, vitamin K, vitamin D, vitamin E biotin, folic acid, and inorganic salts of vanadium, calcium, magnesium, iron, zinc, selenium, chromium, copper and manganese by weight part in a shear mixer, fully shearing the mixture, grinding the sheared mixture to particles with grain size of less than 10µm to obtain a first mixture;
(2) Uniformly mixing the inulin and isolated soy protein powder in a mixer to obtain a second mixture;
(3) Mixing corn fiber powder, black bean extract, Brazil mushroom extract, soya bean lecithin, semen phaseoli extract, L-carnitine, β carotene, lycopene, citrus extract, acerola cherry extract, grape seed extract, maltodextrin, essence, ethyl maltol, aspartame and acesulfame to obtain a third mixture, adding ethanol and acetone combined solvent into the third mixture, fully mixing to obtain mixed liquid, spray-drying or frozen-drying the liquid to obtain a powder product;
(4) Adding the first mixture, the second mixture and the powder product in to a mixer, mixing them for 15 to 30 minutes, screening them with a 50-80 mesh sieve, sterilizing them with microwave for 0.5-1h, packaging them, and obtaining the finished product of complete nutritional powder after inspection.

7. The preparation method of claim 6, wherein the weight ratio of the third mixture to the ethanol in the step (3) is between 1:3 and 1:10.

8. The preparation method of claim 6 or 7, wherein the volume ratio of the ethanol to the acetone is between 10:1 and 10:3.

9. The preparation method of any one of claims 6-8, wherein the Brazil mushroom extract is the extract obtained from fermented Brazil mushroom.

## Patentansprüche

1. Umfassendes Nährstoffpulver, **gekennzeichnet dadurch, dass** es die folgenden Zutaten umfasst: Vitamin B1, Vitamin B2, Vitamin B6, Pantothensäure, Niacin, Vitamin B12, Vitamin C, Vitamin A, Vitamin K, Vitamin D, Vitamin E, Biotin, Folsäure, Kalzium, Magnesium, Eisen, Zink, Selen, Chrom, Kupfer, Mangan, Maisfaserpulver, Inulin, isoliertes Sojaproteinpulver, Extrakt aus schwarzen Bohnen, Extrakt aus brasilianischem Mandel-Egerling, Sojabohnenlecithin, Extrakt aus Phaseoli-Samen, L-Carnitin, β-Karotin, Lycopen, Zitrusextrakt, Vanadium, Acerolakirschextrakt, Traubenkernextrakt, Maltodextrin, Essenz, Ethylmaltol, Aspartam und Acesulfam.

2. Umfassendes Nährstoffpulver nach Anspruch 1 mit den folgenden Zutaten in Gewichtsanteilen:
| Zutaten | Gewichtsverhältnis |
|---|---|
| Vitamin B1 | 0.04 |
| Vitamin B2 | 0.04 |
| Vitamin B6 | 0.04 |
| Pantothensäure | 0.04 |
| Niacin | 0.04 |
| Vitamin B12 | 0.00004 |
| Vitamin C | 0.45 |
| Vitamin A | 0.0009 |
| Vitamin K | 0.000027 |
| Vitamin D | 0.0000113 |
| Vitamin E | 0.75 |
| Biotin | 0.00004 |
| Folsäure | 0.00059 |
| Kalzium | 1.625 |
| Magnesium | 0.8125 |
| Eisen | 0.027 |
| Zink | 0.18 |
| Selen | 0.00026 |
| Chrom | 0.0004 |
| Kupfer | 0.0022 |
| Mangan | 0.0045 |
| Maisfaserpulver | 13 |
| Inulin | 8 |
| Isoliertes Sojaproteinpulver | 63 |
| Extrakt aus schwarzen Bohnen | 6.25 |
| Extrakt aus brasilianischem Mandel-Egerling | 3.75 |
| Sojabohnenlecithin | 12.5 |
| Extrakt aus Phaseoli-Samen | 3.75 |
| L-Carnitin | 0.648 |
| β-Karotin | 0.026 |
| Lycopen | 3 |
| Zitrusextrakt | 0.648 |
| Vanadium | 0.00015 |
| Acerolakirschextrakt | 7.776 |
| Traubenkernextrakt | 0.7776 |
| Maltodextrin | 1-2 |
| Essenz | 0.5-2 |
| Ethylmaltol | 0.1-0.2 |
| Aspartam | 0.05-0.5 |
| Acesulfam | 0.05-0.5 |

3. Umfassendes Nährstoffpulver nach Anspruch 1 oder 2, wobei der Extrakt aus brasilianischem Mandel-Egerling mindestens 80 Gew. % Polysaccharid umfasst, und wobei proteineingebundenes Polysaccharid mehr als 80 Gew. % des Polysaccharids ausmacht, und vorzugsweise (I-6)-D-Glucan-Protein-Komplex ist.

4. Umfassendes Nährstoffpulver nach einem beliebigen der Ansprüche 1-3, wobei der Acerolakirschextrakt 5-15 Gew.% 5-Hydroxymethyl-Furan-2-Formaldehyd und 50-70 Gew. % Prolin umfasst.

5. Umfassendes Nährstoffpulver nach einem beliebigen der Ansprüche 1-4, wobei der Traubenkernextrakt mindestens 35 Gew.% oligomere Proanthocyanidine umfasst.

6. Herstellungsverfahren des umfassenden Nährstoffpulvers nach einem beliebigen der Ansprüche 1-5 mit folgenden Phasen:
(1) Mischen von Vitamin B1, Vitamin B2, Vitamin B6, Pantothensäure, Niacin, Vitamin B12, Vitamin C, Vitamin A, Vitamin K, Vitamin D, Vitamin-E-Biotin, Folsäure und anorganischen salzen von Vanadium, Kalzium, Magnesium, Eisen, Zink, Selen, Chrom, Kupfer und Mangan nach Gewichtsanteil in einem Schermischer, vollständige Scherung der Mischung, Vermahlen der gescherten Mischung zu Teilchen mit Korngröße von weniger als 10 µm, um eine erste Mischung zu erhalten;
(2) Gleichmäßiges Mischen des Inulins und des isolierten Sojaproteinpulvers in einem Mischer, um eine zweite Mischung zu erhalten;
(3) Mischen von Maisfaserpulver, Extrakt aus schwarzen Bohnen, Extrakt aus brasilianischem Mandel-Egerling, Sojabohnenlecithin, Extrakt aus Phaseoli-Samen, L-Carnitin, β-Karotin, Lycopen, Zitrusextrakt, Acerolakirschextrakt, Traubenkernextrakt, Maltodextrin, Essenz, Ethylmaltol, Aspartam und Acesulfam, um eine dritte Mischung zu erhalten, Zugabe eines kombinierten Lösungsmittels mit Ethanol und Aceton in die dritte Mischung, vollständiges Mischen, um gemischte Flüssigkeit zu erhalten, Sprühtrocknung oder Gefriertrocknung der Flüssigkeit, um ein Pulverprodukt zu erhalten;
(4) Zugabe der ersten Mischung, der zweiten Mischung und des Pulverprodukts in einen Mischer und 15 bis 30 Minuten lang mischen, Sieben mit einem Sieb mit Maschenweite 50-80, Sterilisieren mit Mikrowelle 0.5-1 h lang, Verpacken und Erhalt des Fertigfabrikats von umfassendem Nährstoffpulver nach Inspektion.

7. Herstellungsverfahren nach Anspruch 6, wobei das Gewichtsverhältnis der dritten Mischung zu dem Ethanol in Phase (3) zwischen 1:3 und 1:10 liegt.

8. Herstellungsverfahren nach Anspruch 6 oder 7, wobei das Volumenverhältnis des Ethanols zu dem Aceton zwischen 10:1 und 10:3 liegt.

9. Herstellungsverfahren nach einem beliebigen der Ansprüche 6-8, wobei der Extrakt aus brasilianischem Mandel-Egerling der Extrakt ist, der aus fermentiertem brasilianischem Mandel-Egerling erhalten wird.

## Revendications

1. Poudre nutritionnelle complète, qui est **caractérisée en ce qu'**elle comprend les ingrédients suivants: vitamine B1, vitamine B2, vitamine B6, acide pantothénique, niacine, vitamine B12, vitamine C, vitamine A, vitamine K, vitamine D, vitamine E, biotine, acide folique, calcium, magnésium, fer, zinc, sélénium, chrome, cuivre, manganèse, poudre de fibre de maïs, inuline, poudre de protéine de soja isolée, extrait de haricot noir, extrait de champignons du Brésil, lécithine de fèves de soja, extrait de semence de phaseoli, L-carnitine, β carotène, lycopène, extrait d'agrume, vanadium, extrait de cerise d'acérola, extrait de pépins de raisin, maltodextrine, essence, éthyl maltol, aspartame et acésulfame.

2. Poudre nutritionnelle complète selon la revendication 1, comprenant les ingrédients suivants, en parties en poids :
| Ingrédients | Rapport en poids |
|---|---|
| Vitamine B1 | 0,04 |
| Vitamine B2 | 0,04 |
| Vitamine B6 | 0,04 |
| Acide pantothénique | 0,04 |
| Niacine | 0,04 |
| Vitamine B12 | 0,00004 |
| Vitamine C | 0,45 |
| Vitamine A | 0,0009 |
| Vitamine K | 0,000027 |
| Vitamine D | 0,0000113 |
| Vitamine E | 0,75 |
| Biotine | 0,00004 |
| Acide folique | 0,00059 |
| Calcium | 1,625 |
| Magnésium | 0,8125 |
| Fer | 0,027 |
| Zinc | 0,18 |
| Sélénium | 0,00026 |
| Chrome | 0,0004 |
| Cuivre | 0,0022 |
| Manganèse | 0,0045 |
| Poudre de fibre de maïs | 13 |
| Inuline | 8 |
| Poudre de protéine de soja isolée | 63 |
| Extrait de haricot noir | 6,25 |
| Extrait de champignons du Brésil | 3,75 |
| Lécithine de fèves de soja | 12,5 |
| Extrait de semence de phaseoli | 3,75 |
| L-carnitine | 0,648 |
| β Carotène | 0,026 |
| Lycopène | 3 |
| Extrait d'agrume | 0,648 |
| Vanadium | 0,00015 |
| Extrait de cerise d'acérola | 7,776 |
| Extrait de pépins de raisin | 0,7776 |
| Maltodextrine | 1-2 |
| Essence | 0,5-2 |
| Ethyl malthol | 0,1-0,2 |
| Aspartame | 0,05-0,5 |
| Acésulfame | 0,05-0,5 |

3. Poudre nutritionnelle complète selon l'une des revendications 1 ou 2, dans laquelle l'extrait de champignon du Brésil comprend au moins 80% en poids de polysaccharide, et dans laquelle le polysaccharide lié à une protéine représente plus de 80% en poids de polysaccharide, et est préférentiellement un complexe (1-6) -D-glucane-protéine.

4. Poudre nutritionnelle complète selon l'une quelconque des revendications 1 à 3, dans laquelle l'extrait de cerise d'acérola comprend de 5 à 15% en poids de 5-hydroxyméthyl-furane-2-formaldéhyde et de 50 à 70% en poids de proline.

5. Poudre nutritionnelle complète selon l'une quelconque des revendications 1 à 4, dans laquelle l'extrait de pépins de raisin comprend au moins 35% en poids de proanthocyanidines oligomériques.

6. Procédé de préparation de la poudre nutritionnelle complète selon l'une quelconque des revendications 1 à 5, comprenant les étapes suivantes :
(1) mélanger la vitamine B1, la vitamine B2, la vitamine B6, l'acide pantothénique, la niacine, la vitamine B12, la vitamine C, la vitamine A, la vitamine K, la vitamine D, la vitamine E, la biotine, l'acide folique et des sels inorganiques de vanadium, de calcium, de magnésium, de fer, de zinc, de sélénium, de chrome, de cuivre et de manganèse en parties en poids dans un mélangeur à cisaillement, cisailler complètement le mélange, broyer le mélange cisaillé en particules ayant une dimension de grain inférieure à 10 µm pour obtenir un premier mélange ;
(2) mélanger uniformément l'inuline et la poudre de protéine de soja isolée dans un mélangeur pour obtenir un deuxième mélange;
(3) mélanger la poudre de fibre de maïs, l'extrait de haricot noir, l'extrait de champignon du Brésil, la lécithine de fèves de soja, l'extrait de semence de phaseoli, la L-carnitine, le β carotène, le lycopène, l'extrait d'agrume, l'extrait de cerise d'acérola, l'extrait de pépins de raisin, la maltodextrine, l'essence, l'éthyl maltol, l'aspartame et l'acésulfame pour obtenir un troisième mélange, ajouter un solvant combiné d'éthanol et d'acétone dans le troisième mélange, mélanger complètement pour obtenir un liquide mélangé, sécher par pulvérisation ou lyophiliser le liquide pour obtenir un produit pulvérulent ;
(4) ajouter le premier mélange, le second mélange et le produit pulvérulent dans un mélangeur, les mélanger pendant 15 à 30 minutes, les tamiser avec un tamis de 50-80 mesh d'ouverture de maille, les stériliser au micro-ondes pendant 0,5-1 h, les conditionner et obtenir le produit fini de poudre nutritionnelle complète après inspection.

7. Procédé de préparation selon la revendication 6, dans lequel le rapport en poids du troisième mélange à l'éthanol dans l'étape (3) est entre 1:3 et 1:10.

8. Procédé de préparation selon l'une des revendications 6 ou 7, dans lequel le rapport en volume de l'éthanol à l'acétone est entre 10:1 et 10:3.

9. Procédé de préparation selon l'une quelconque des revendications de 6 à 8, dans lequel l'extrait de champignon du Brésil est l'extrait obtenu à partir de champignon du Brésil fermenté.
